# EUROPEAN PATENT APPLICATION

(11) **EP 2 752 957 A1**
(43) Date of publication of application: **09.07.2014**
(21) Application number: 13186186.6
(22) Date of filing: 26.09.2013
(51) Int. Cl.: H02J 5/00, H02J 7/02

(54) **Wireless transmitting device for wireless charging**

(30) Priority: 04.01.2013 TW 102100316
(71) Applicant: Primax Electronics Ltd, 114 Neihu, Taipei (TW)
(72) Inventor: Chiu, Hung-Wei, Taiwan, ROC Taipei (TW); Lo, Chun-Hao, Taiwan, ROC Taipei (TW); Ho, Yung-Hsien, Taiwan, ROC Taipei (TW)
(74) Representative: Claydon, Michelle Leonie

(57) **Abstract**

A wireless transmitting device for wireless charging includes a main body, a first encapsulated transmission coil and a second encapsulated transmission coil. The first encapsulated transmission coil and the second encapsulated transmission coil are disposed in the main body, and the second encapsulated transmission coil is adjacent to the first encapsulated transmission coil. Each of the first encapsulated transmission coil and the second encapsulated transmission coil has a quadrangular winding configuration so that the magnetic flux generated at the short-side section of the first or second encapsulated transmission coil is greater than the magnetic flux generated by an encapsulated transmission coil having a circular winding configuration. Therefore, the wireless charging range of the wireless transmitting device for wireless charging is improved.

## Description

### FIELD OF THE INVENTION

The present invention relates to a wireless transmitting device, and more particularly to a wireless transmitting device for wireless charging.

### BACKGROUND OF THE INVENTION

An electronic device generally obtains electric power from a power supply via a power cord connected to the electronic device and plugged into a socket of the power supply. With the development of science and technologies, users show highly demand on compact electronic devices in consideration of portability. The power cord, however, adversely affects the portability of an electronic device. Therefore, a portable electronic device is generally equipped with a rechargeable cell for supplying power.

When a power level of the rechargeable cell of the electronic device approaches a lower limit, it is necessary to recharge the cell. The cell can be recharged with a charging device. Conventionally, a transmitting device for charging a cell is plugged to a power supply while including a cable plugged to the electronic device so as to transmit power from the power supply to the electronic device via the cable. During the charging process, the electronic cannot be freely used or moved due to the cable with a length limit. Furthermore, frequent and repetitive plugging and unplugging operations of the conventional transmitting device for recharging might damage the connector of the cable plugged to the electronic device. The charging efficiency might thus be deteriorated. Once the connector is seriously damaged, the cable would lose its function.

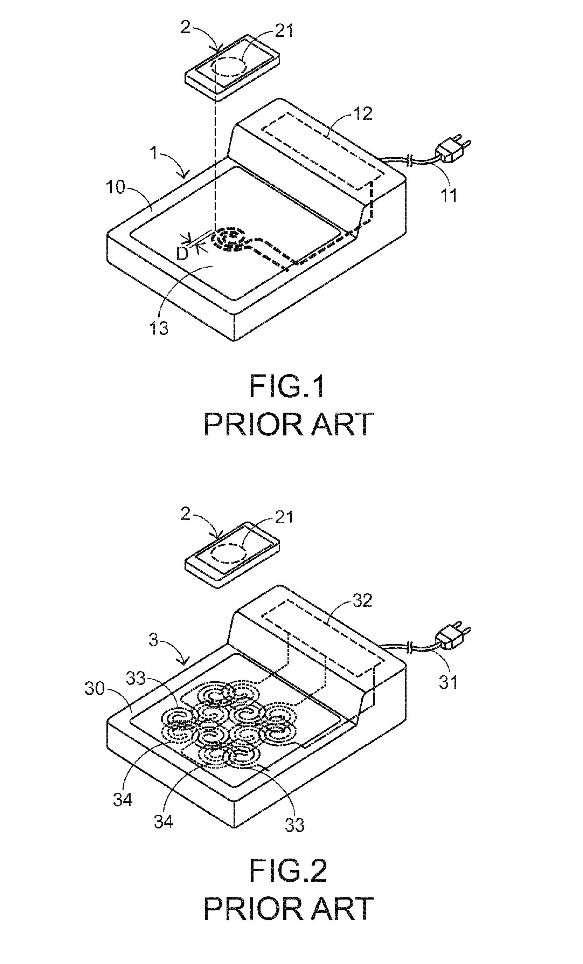

In view of the problems encountered by the conventional transmitting device with a cable for charging, a variety of techniques are developed. Nowadays, wireless transmitting devices for wireless charging have been commercialized. Please refer to FIG. 1, which is a schematic diagram illustrating a structure of a wireless charger transmitter. The wireless charger transmitter 1 includes a main body 10, a power cord 11, a power module 12, and a transmission coil 13. On the other hand, the conventional electronic device includes a housing 20, an encapsulated receiving coil 21, and a rechargeable cell (not shown).

In the wireless charger transmitter 1, the power cord 11 is disposed outside the main body 10 for connecting to a power supply (not shown). The power module 12 and the transmission coil 13 are both disposed inside the main body 10, and the power module 12 is connected to both the power cord 11 and the transmission coil 13 and driven by the power supply to generate a current. While the current is flowing through the transmission coil 13, an electromagnetic effect occurs. The transmission coil 13 then outputs a corresponding power in response to a magnetic flux resulting from the electromagnetic effect. On the other hand, in the conventional electronic device 2, the encapsulated receiving coil 21 is disposed inside the housing 20 for receiving the power from the transmission coil 13. The rechargeable cell 22 is connected to the encapsulated receiving coil 21 for storing the power received by the encapsulated receiving coil 21 for subsequent use.

In general, the main body 10 of the conventional wireless charger transmitter 1 is configured as a platform. The main body 10 of the conventional wireless charger transmitter 1 has a volume greater than that of the housing 20 of the conventional electronic device 2 so that the user can place the conventional electronic device 2 thereon. During the power transferring process from the conventional wireless charger transmitter 1 to the conventional electronic device 2, the user has to intentionally make the encapsulated receiving coil 21 inside the conventional electronic device 2 close to the transmission coil 13 of the conventional wireless charger transmitter 1 so as to well align the transmission coil 13 with the encapsulated receiving coil 21, thereby successfully transferring power to the encapsulated receiving coil 21. The encapsulated receiving coil 21 and the transmission coil 13 are both wound into a circular configuration, and a radius of the circular transmission coil 13 is about 15 mm.

In Fig. 1, when a user places the conventional electronic device 2 on the conventional wireless charger transmitter 1 with precise alignment of the transmission coil 13 with the encapsulated receiving coil 21, the encapsulated receiving coil 21 can receive maximal power. In brief, the charging efficiency is the highest at this position. Unfortunately, a common user will not precisely align the transmission coil 13 with the encapsulated receiving coil 21 on purpose. Instead, the user is likely to just place the conventional electronic device 2 on the conventional wireless charger transmitter 1, which would result in inefficient charging. According to experimental data, if the distance from the encapsulated receiving coil 21 of the conventional electronic device 2 to the transmission coil 13 is greater than a specified value D, which is about 3 mm, the wireless charging efficiency approximates zero. In other words, the horizontal or vertical wireless charging range is estimated to be 36 mm. The wireless charging range is small and the alignment of the transmission coil 13 with the encapsulated receiving coil 21 is difficult. Therefore, the user has to align the transmission coil 13 with the encapsulated receiving coil 21 before the wireless charging can be performed.

Since a number of users feel bothered by the work of aligning the transmission coil with the encapsulated receiving coil, another conventional wireless charger transmitter is commercially available, which does not require precise alignment between the transmission coil and the encapsulated receiving coil. Referring to FIG. 2, a structural diagram of the another conventional wireless charger transmitter and an electronic device is schematically shown. The conventional wireless charger transmitter 3 includes a main body 30, a power cord 31, a power module 32, a plurality of first transmission coils 33, and a plurality of second transmission coils 34. The architecture of the conventional wireless charger transmitter 3 and its element configuration and functions are similar to those of the conventional wireless charger transmitter 1, and are not to be redundantly described herein. The difference between the conventional wireless charger transmitter 3 and the conventional wireless charger transmitter 1 lies in that the conventional wireless charger transmitter 3 includes a plurality of first transmission coils 33, and a plurality of second transmission coils 34, and the plurality of first transmission coils 33 occupy the internal of the conventional wireless charger transmitter 3 while the plurality of second transmission coils 34 are disposed under the plurality of first transmission coils 33. The second transmission coils 34 are disposed in the gaps between a plurality of first transmission coils 33 for enhancing power transfer. The user may arbitrarily place the conventional electronic device 2 on the main body 30 without intentional alignment, and the plurality of first transmission coils 33 and plurality of second transmission coils 34 inside the main body 30 can perform power charging to the encapsulated receiving coil 21 of the conventional electronic device 2.

Since the conventional wireless charger transmitter 3 includes the plurality of first transmission coils 33 and plurality of second transmission coils 34, and a great number of the plurality of first transmission coils 33 and plurality of second transmission coils 34 require a high level of current, the conventional wireless charger transmitter 3 can only be driven with relatively large power consumption. When the plurality of first transmission coils 33 and the plurality of second transmission coils 34 are conducted, both the plurality of first transmission coils 33 and the plurality of second transmission coils 34 generate power as a result of an electromagnetic effect. However, the power generated by the plurality of second transmission coils 34 disposed under the plurality of first transmission coils 33 is likely to be shielded by the plurality of first transmission coils 33. Some of the power cannot be transmitted to the encapsulated receiving coil 21, and thus wasted. Therefore, the conventional wireless charger transmitter 3 has a disadvantageously low power rate. A wireless transmitting device for wireless charging operable in an improved work range would be required.

### SUMMARY OF THE INVENTION

The present invention provides a wireless transmitting device for wireless charging operable in a relatively large work range.

The present invention also provides a wireless transmitting device for wireless charging involving relative low power consumption.

In a preferred embodiment, the present invention provides a wireless transmitting device for wireless charging by transmitting a power to an encapsulated receiving coil of an electronic device. The wireless transmitting device comprises a main body; a first encapsulated transmission coil disposed in the main body and close to a side of the main body, being selectively conducted to generate an electromagnetic effect and transmit the power to the encapsulated receiving coil in response to the electromagnetic effect; a second encapsulated transmission coil disposed in the main body and adjacent to the first encapsulated transmission coil, being selectively conducted to generate the electromagnetic effect and transmit the power to the encapsulated receiving coil in response to the electromagnetic effect; wherein the first encapsulated transmission coil has a quadrangular winding configuration, and the second encapsulated transmission coil has the quadrangular winding configuration.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic diagram illustrating a structure of a conventional wireless charger transmitter in combination with an electronic device;

FIG. 2 is a schematic diagram illustrating a structure of another conventional wireless charger transmitter in combination with an electronic device;

FIG. 3 is a schematic diagram illustrating a structure of a wireless transmitting device for wireless charging according to a first embodiment of the present invention in combination with an electronic device;

FIG. 4 is a block diagram of the first embodiment of the wireless transmitting device for wireless charging in combination with the electronic device;

FIG. 5 is a cross-sectional top view schematically showing the first embodiment of the wireless transmitting device for wireless charging;

FIG. 6 is a schematic top view of a first encapsulated transmission coil used in the first embodiment of the wireless transmitting device for wireless charging; and

FIG. 7 is a schematic diagram illustrating a structure of a wireless transmitting device for wireless charging according to a second embodiment of the present invention in combination with an electronic device.

### DETAILED DESCRIPTION OF THE PREFERRED EMBODIMENT

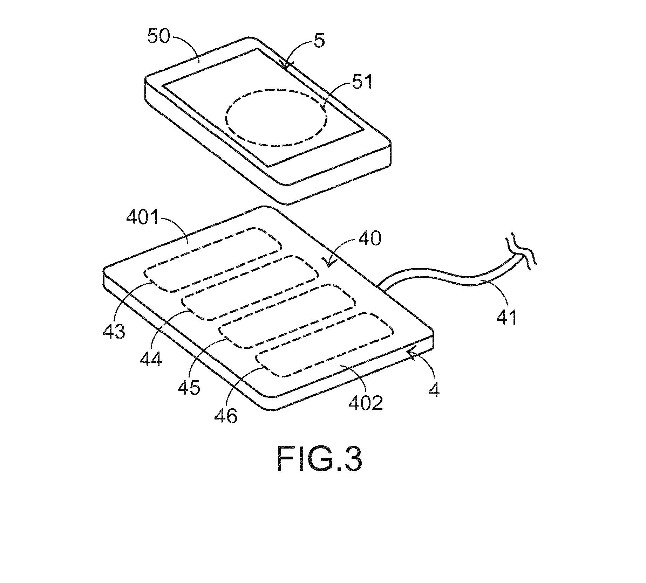

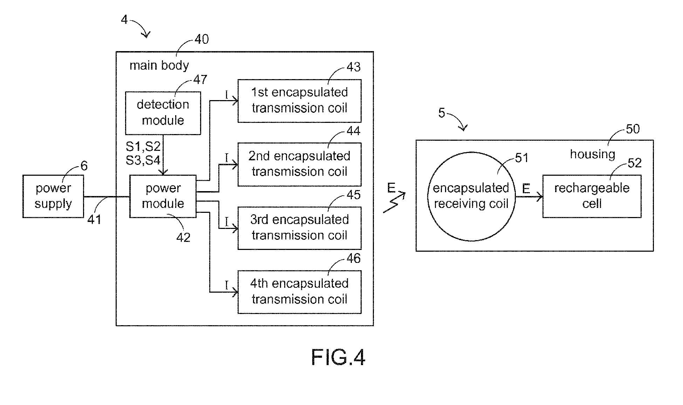

In view of the problems encounter by the prior art, a wireless transmitting device for wireless charging an electronic device is provided according to the present invention. Please refer to FIG. 3 as well as FIG. 4. FIG. 3 is a schematic diagram illustrating a structure of a wireless transmitting device for wireless charging according to a first embodiment of the present invention in combination with an electronic device; and FIG. 4 is a block diagram of the first embodiment of the wireless transmitting device for wireless charging in combination with the electronic device. The wireless transmitting device 4 for wireless charging includes a main body 40, a power cable 41, a power module 42, a first encapsulated transmission coil 43, a second encapsulated transmission coil 44, a third encapsulated transmission coil 45, a fourth encapsulated transmission coil 46, and a detection module 47. The power cable 41 is disposed outside the main body 40 for coupling to a power supply 6. The first encapsulated transmission coil 43 is disposed in the main body 40 and close to a side 401 of the main body 40; the second encapsulated transmission coil 44 is disposed in the main body 40 and adjacent to the first encapsulated transmission coil 43; the third encapsulated transmission coil 45 is disposed in the main body 40 and adjacent to the second encapsulated transmission coil 44; the fourth encapsulated transmission coil 46 is disposed in the main body 40 and adjacent to the third encapsulated transmission coil 45. In other words, the first encapsulated transmission coil 43, second encapsulated transmission coil 44, third encapsulated transmission coil 45, and fourth encapsulated transmission coil 46 are arranged in a row in the main body 40.

In this embodiment, the main body of the wireless transmitting device 4 for wireless charging is configured as a platform. Each of the first encapsulated transmission coil 43, second encapsulated transmission coil 44, third encapsulated transmission coil 45, and fourth encapsulated transmission coil 46 is configured as a quadrangle, and the first encapsulated transmission coil 43, second encapsulated transmission coil 44, third encapsulated transmission coil 45, and fourth encapsulated transmission coil 46 have the same size.

In the wireless transmitting device 4 for wireless charging, the power module 42 and the plurality of encapsulated transmission coils 43∼46 are all disposed inside the main body 40. The power module 42 is connected to both the power cable 41 and the plurality of encapsulated transmission coils 43∼46. The power module 42 is driven by the power supply 6 to generate a current I. While the current I is flowing through a selected one of the plurality of encapsulated transmission coils 43∼46, an electromagnetic effect occurs. The selected one of the plurality of encapsulated transmission coils 43∼46 then generates a power E in response to a magnetic flux resulting from the electromagnetic effect. In this way, the power E can be outputted by the selected one of the plurality of encapsulated transmission coils 43∼46.

On the other hand, an electronic device 5 includes a housing 50, an encapsulated receiving coil 51, and a rechargeable cell 52. The encapsulated receiving coil 51 is enclosed with the housing 50 of the electronic device. The encapsulated receiving coil 51, upon the housing 50 of the electronic device becomes close enough to or contacts with the main body 40 of the wireless transmitting device 4, receives the power E from the plurality of encapsulated transmission coils 43∼46. The electronic device 5 can be a mobile phone. The encapsulated receiving coil 51 can be wound into a circular configuration, and a radius of the circular transmission coil 13 is, for example, about 15 mm. In an alternative embodiment, the winding of the encapsulated receiving coil results in an elliptic configuration or any other suitable shape.

As shown in FIG. 4, the detection module 47 is disposed in the main body 40 and connected to the power module 42 for detecting whether the electronic device 5 has been placed on the main body 40 or not. In addition, which of the plurality of encapsulated transmission coils 43∼46 is approached by the electronic device 5 is detected. If it is determined by the detection module 47 that the electronic device 5 is not disposed on the main body 40, the detection of the disposition of the electronic device 5 on the main body 40 continues. On the contrary, if it is determined by the detection module 47 that the electronic device 5 has been disposed on the main body 40, determine whether the electronic device 5 approaches the first encapsulated transmission coil 43, the second encapsulated transmission coil, the third encapsulated transmission coil 45, or the fourth encapsulated transmission coil 46.

If it is determined by the detection module 47 that the electronic device 5 has been disposed on the main body 40, and the electronic device 5 approaches the first encapsulated transmission coil 43, the first encapsulated transmission coil 43 is electrically conducted and generates and outputs the power E to the encapsulated receiving coil 51. If it is determined by the detection module 47 that the electronic device 5 has been disposed on the main body 40, and the electronic device 5 approaches the second encapsulated transmission coil 44, the second encapsulated transmission coil 44 is electrically conducted and generates and outputs the power E to the encapsulated receiving coil 51. If it is determined by the detection module 47 that the electronic device 5 has been disposed on the main body 40, and the electronic device 5 approaches the third encapsulated transmission coil 45, the third encapsulated transmission coil 45 is electrically conducted and generates and outputs the power E to the encapsulated receiving coil 51. If it is determined by the detection module 47 that the electronic device 5 has been disposed on the main body 40, and the electronic device 5 approaches the fourth encapsulated transmission coil 46, the fourth encapsulated transmission coil 46 is electrically conducted and generates and outputs the power E to the encapsulated receiving coil 51. In this embodiment, the detection module 47 can be implemented with a firmware in the wireless transmitting device 4.

Preferably, as understood in the above embodiment, the plurality of encapsulated transmission coils 43∼46 are not electrically conducted at the same time. More specifically, only one of the plurality of encapsulated transmission coils 43∼46 is electrically conducted to output the power E to the encapsulated receiving coil 51 at one time. Therefore, power consumption can be reduced, and significant magnetic interference caused by conduction of all the plurality of encapsulated transmission coils 43∼46 can be prevented, while assuring the wireless charging efficiency.

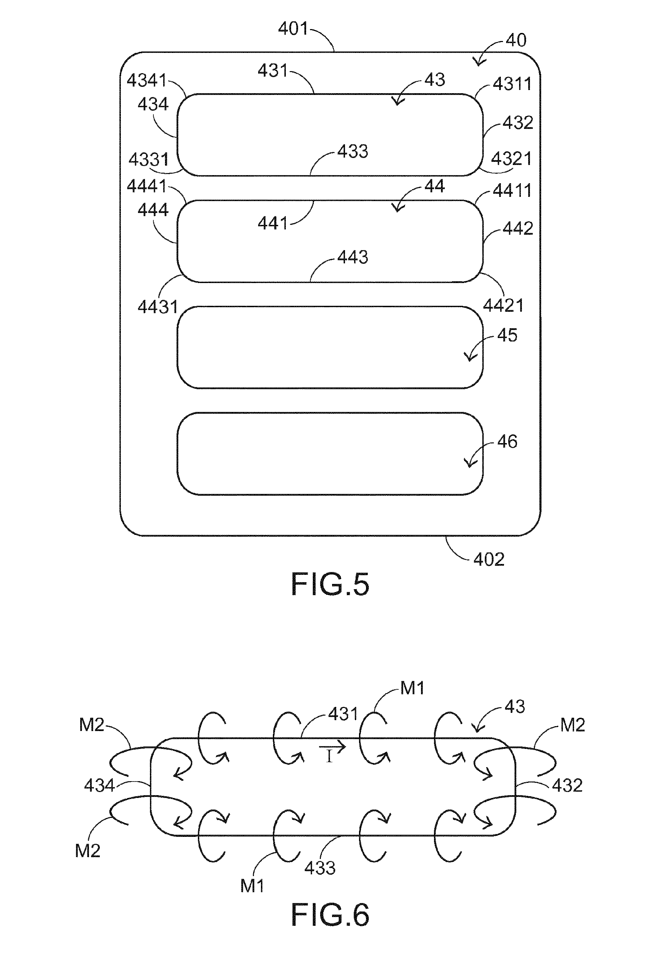

Hereinafter, the structure of the plurality of encapsulated transmission coils 43∼46 will be described in more detail. Please refer to Fig. 5, which is a cross-sectional top view schematically showing the first embodiment of the wireless transmitting device for wireless charging. The first encapsulated transmission coil 43 includes a first long-side section 431, a first short-side section 432, a second long-side section 433, and a second short-side section 434, wherein the first long-side section 431 is close to a side 401 of the main body 40; and the first short-side section 432 is connected to the first long-side section 431 via a first arc section 4311 between the first short-side section 432 and the first long-side section 431. The second long-side section 433 is connected to the first short-side section 432 via a second arc section 4321 between the second long-side section 433 and the first short-side section 432, and close to the second encapsulated transmission coil 44. The second short-side section 434 is connected to the second long-side section 433 via a third arc section 4331 between the second short-side section 434 and the second long-side section 433. Likewise, there is a fourth arc section 4341 between the second short-side section 434 and the first long-side section 431.

In the first encapsulated transmission coil 43, the first long-side section 431 is substantially parallel to the second long-side section 433; the first short-side section 432 is substantially parallel to the second short-side section 434; the first long-side section 431 is substantially perpendicular to the first short-side section 432; and the second long-side section 433 is substantially perpendicular to the second short-side section 434. In other words, the first long-side section 431, first short-side section 432, the second long-side section 433 and second short-side section 434 form a quadrangle, e.g. a rectangle. In an example, the first long-side section 431 and the second long-side section 433 are each 30 mm; and the first short-side section 432 and the second short-side section 434 are each 20 mm.

It is to be noted that the perpendicular configuration of adjacent sections might hinder the flow of the current I. The first arc section 4311, second arc section 4321, third arc section 4331 and fourth arc section 4341 are designed next to the first long-side section 431, first short-side section 432, the second long-side section 433 and second short-side section 434, respectively, for smoothening the flow of the current I.

The second encapsulated transmission coil 44 includes a third long-side section 441, a third short-side section 442, a fourth long-side section 443, and a fourth short-side section 444, wherein the third long-side section 441 is adjacent to the second long-side section 433 of the first encapsulated transmission coil 43; and the third short-side section 442 is connected to the third long-side section 441 via a fifth arc section 4411 between the third short-side section 442 and the third long-side section 441. The fourth long-side section 443 is connected to the third short-side section 442 via a sixth arc section 4421 between the fourth long-side section 443 and the third short-side section 442, and close to the third encapsulated transmission coil 45. The fourth short-side section 444 is connected to the fourth long-side section 443 via a seventh arc section 4431 between the fourth short-side section 444 and the fourth long-side section 443. Likewise, there is an eighth arc section 4441 between the fourth short-side section 444 and the third long-side section 441.

In the second encapsulated transmission coil 44, the third long-side section 441 is substantially parallel to the fourth long-side section 443; the third short-side section 442 is substantially parallel to the fourth short-side section 444; the third long-side section 441 is substantially perpendicular to the third short-side section 442; and the fourth long-side section 443 is substantially perpendicular to the fourth short-side section 444. In other words, the third long-side section 441, third short-side section 442, fourth long-side section 443 and fourth short-side section 444 form a quadrangle, e.g. a rectangle. The fifth arc section 4411, sixth arc section 4421, seventh arc section 4431 and eighth arc section 4441 are disposed next to the third long-side section 441, third short-side section 442, fourth long-side section 443 and fourth short-side section 444, respectively, to avoid hindering the flow of the current I, just like the reasons described in the embodiment of the first encapsulated transmission coil.

The third encapsulated transmission coil 45 is adjacent to the second encapsulated transmission coil 44, and the fourth encapsulated transmission coil 46 is adjacent to another side 402 of the main body and adjacent to the third encapsulated transmission coil 45. Since the structures and sizes of the third encapsulated transmission coil 45 and fourth encapsulated transmission coil 46 are identical to those of the first encapsulated transmission coil 43 in this embodiment, no redundant description will be made herein.

Subsequently, the operations of the wireless transmitting device 4 for wireless charging will be described. After the wireless transmitting device 4 for wireless charging is activated, the detection module 47 detects whether the electronic device 5 has been placed on the main body 40 or not at a preset interval. If a user places the electronic device 5 on the main body 40 in a manner that the electronic device 5 approaches the first encapsulated transmission coil 43, the detection of the electronic device 5 will be first conducted by the detection module 47, and then a state of the electronic device 5 approaching the first encapsulated transmission coil 43 is detected. Once the location of the electronic device 5 is determined by the detection module 47, the detection module 47 sends a first driving signal S1 to the power module 42. The power module 42, upon receiving the first driving signal S1, generates the current I. The current I flows through the first encapsulated transmission coil 43 so that an electromagnetic effect occurs, thereby generating and outputting the power E from the first encapsulated transmission coil 43 to the encapsulated receiving coil 51.

Likewise, if a user places the electronic device 5 on the main body 40 in a manner that the electronic device 5 approaches the second encapsulated transmission coil 44, the detection module 47 sends a second driving signal S2 to the power module 42. The power module 42, upon receiving the second driving signal S2, generates the current I. The current I flows through the second encapsulated transmission coil 44 so that an electromagnetic effect occurs, thereby generating and outputting the power E from the second encapsulated transmission coil 44 to the encapsulated receiving coil 51. If a user places the electronic device 5 on the main body 40 in a manner that the electronic device 5 approaches the third encapsulated transmission coil 45, the detection module 47 sends a third driving signal S3 to the power module 42. The power module 42, upon receiving the third driving signal S3, generates the current I. The current I flows through the third encapsulated transmission coil 45 so that an electromagnetic effect occurs, thereby generating and outputting the power E from the third encapsulated transmission coil 45 to the encapsulated receiving coil 51. If a user places the electronic device 5 on the main body 40 in a manner that the electronic device 5 approaches the fourth encapsulated transmission coil 46, the detection module 47 sends a fourth driving signal S4 to the power module 42. The power module 42, upon receiving the fourth driving signal S4, generates the current I. The current I flows through the fourth encapsulated transmission coil 46 so that an electromagnetic effect occurs, thereby generating and outputting the power E from the fourth encapsulated transmission coil 46 to the encapsulated receiving coil 51.

Hereinafter, please refer to FIG. 6, which is a schematic top view of the first encapsulated transmission coil used in the first embodiment of the wireless transmitting device for wireless charging. In FIG. 6, it is shown that the first encapsulated transmission coil 43 is wound as a quadrangle. The first encapsulated transmission coil 43 will be described as an example. Compared with the circular winding of the prior art transmission coil 13, the length of each of the first long-side section 431 and the second long-side section 433 (about 30 mm) is substantially equal to the diameter of the prior art transmission coil 13 (about 30 mm); and the length of each of the first short-side section 432 and the second short-side section 434 (about 20 mm) is less than the diameter of the prior art transmission coil 13 (about 30 mm). It can be understood from the comparison that the first encapsulated transmission coil 43 in this invention occupies less area than the prior art transmission coil 13 does.

Furthermore, since the prior art transmission coil 13 is circularly wound, a substantially constant magnetic flux is generated at any position of the prior art transmission coil 13. In the first encapsulated transmission coil 43, due to a smaller clearance between the first long-side section 431 and the second long-side section 433, which is substantially equal to the length of the first short-side section 432, e.g. 20 mm), first magnetic field lines M1 generated by the first long-side section 431 and the second long-side section 433 in response to the electromagnetic effect squeeze second magnetic field lines M2 generated by the first short-side section 432 and the second short-side section 434 in response to the electromagnetic effect so that the magnetic flux generated by the second magnetic field lines M2 is greater than that generated by the first magnetic field lines M1, and the magnetic flux generated by the second magnetic field lines M2 is also greater than the magnetic flux generated at any position of the prior art transmission coil 13. In response to the relative large magnetic flux generated by the second magnetic field lines M2, the wireless charging range can be increased with about 6 mm. Therefore, the wireless charging range of the first short-side section 432 and the second short-side section 434 for power transmission is about 42 mm, which is larger than the wireless charging range of the prior art transmission coil 13 (i.e. 36 mm) in a horizontal direction. The same principle as applied in the first encapsulated transmission coil 43 can be applied to the second encapsulated transmission coil 44, the third encapsulated transmission coil 45 and the fourth encapsulated transmission coil 46. No redundant descriptions will be given herein.

To sum up, the encapsulated transmission coil of the wireless transmitting device for wireless charging according to the present invention occupies less area than the prior art transmission coil does as the length of the long-side section of the encapsulated transmission coil of the wireless transmitting device for wireless charging according to the present invention is equal to the diameter of the prior art transmission coil. Furthermore, the wireless charging range of the encapsulated transmission coil of the wireless transmitting device for wireless charging according to the present invention along the long side is wider than that of the prior art transmission coil in the horizontal direction. That is, the wireless charging range of the wireless transmitting device 4 according to the present invention is greater than that of the prior art wireless charger transmitter 1. Therefore, a user does not have to precisely align with a certain encapsulated transmission coil to perform wireless charging.

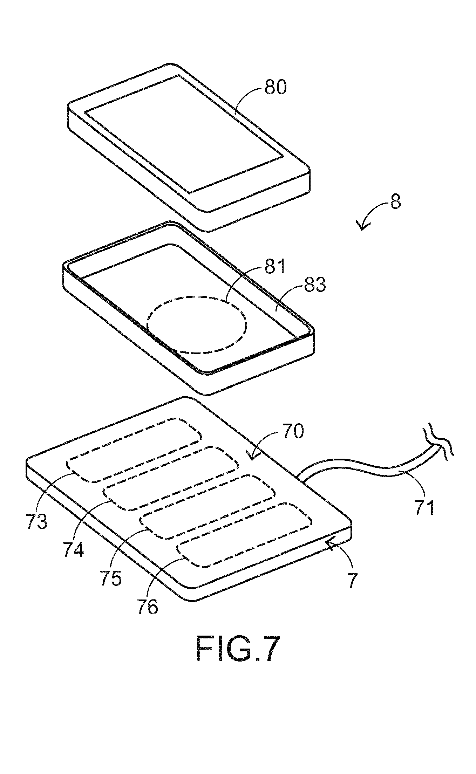

The present invention further provides a second embodiment. Please refer to FIG. 7, which is a schematic diagram illustrating a structure of a wireless transmitting device for wireless charging according to a second embodiment of the present invention in combination with an electronic device. The wireless transmitting device 7 for wireless charging includes a main body 70, a power cable 71, a power module (not shown), a first encapsulated transmission coil 73, a second encapsulated transmission coil 74, a third encapsulated transmission coil 75, a fourth encapsulated transmission coil 76, and a detection module (not shown); and the electronic device 8 includes an electronic device housing 80, an encapsulated receiving coil 81, a rechargeable cell (not shown), and a protection cover 83. The structures of the wireless transmitting device 7 for wireless charging and the electronic device 8 are similar to those of the first embodiment, and the identical parts are not to be redundantly described herein.

This embodiment differs from the first embodiment in that the encapsulated receiving coil 81 of the electronic device 8 is not disposed inside the electronic device housing 80, but disposed inside the protection cover 83, which encloses the electronic device housing 80 for protecting the electronic device housing 80. The encapsulated receiving coil 81 disposed inside the protection cover 83 is connected to the rechargeable cell inside the electronic device housing 80, and the protection cover 83 is connected to the electronic device housing 80 via a Mini Universal Series Bus (Mini USB) so as to conduct the electric connection between the protection cover 83 and the electronic device housing 80. In another embodiment, the protection cover 83 may also be connected to the electronic device housing via another signal transmission interface, for example, a Universal Series Bus (USB).

It is understood from the above two embodiments, quadrangular winding of the encapsulated transmission coils is implemented in the wireless transmitting device for wireless charging according to the present invention, and a plurality of encapsulated transmission coils are disposed adjacent to one another at the long sides of the encapsulated transmission coil. Compared with the prior art transmission coil with a circular winding configuration, the length of the long-side section of the encapsulated transmission coil according to the present invention may be made equal to the diameter of the prior art transmission coil while generating a magnetic flux at the short-side section greater than that generated by the prior art transmission coil. Therefore, the wireless charging range provided by the wireless transmitting device for wireless charging according to the present invention is enlarged so as to facilitate the wireless charging operation of a user.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A wireless transmitting device for wireless charging by transmitting a power to an encapsulated receiving coil of an electronic device, the wireless transmitting device comprising:
a main body;
a first encapsulated transmission coil disposed in the main body and close to a side of the main body, being selectively conducted to generate an electromagnetic effect and transmit the power to the encapsulated receiving coil in response to the electromagnetic effect;
a second encapsulated transmission coil disposed in the main body and adjacent to the first encapsulated transmission coil, being selectively conducted to generate the electromagnetic effect and transmit the power to the encapsulated receiving coil in response to the electromagnetic effect;
wherein the first encapsulated transmission coil has a quadrangular winding configuration, and the second encapsulated transmission coil has the quadrangular winding configuration.

2. The wireless transmitting device for wireless charging according to claim 1, wherein the first encapsulated transmission coil includes:
a first long-side section disposed close to a side of the main body;
a first short-side section connected to the first long-side section via a first arc section between the first short-side section and the first long-side section;
a second long-side section connected to the first short-side section via a second arc section between the second long-side section and the first short-side section, and close to the second encapsulated transmission coil; and
a second short-side section connected to the second long-side section via a third arc section between the second short-side section and the second long-side section, wherein a fourth arc section is formed between the second short-side section and the first long-side section.

3. The wireless transmitting device for wireless charging according to claim 2, wherein the second encapsulated transmission coil 44 includes:
a third long-side section disposed adjacent to the second long-side section of the first encapsulated transmission coil;
a third short-side section connected to the third long-side section via a fifth arc section between the third short-side section and the third long-side section;
a fourth long-side section connected to the third short-side section via a sixth arc section between the fourth long-side section and the third short-side section;
a fourth short-side section connected to the fourth long-side section via a seventh arc section between the fourth short-side section and the fourth long-side section, wherein an eighth arc section is formed between the fourth short-side section and the third long-side section.

4. The wireless transmitting device for wireless charging according to claim 3, wherein the first long-side section, the second long-side section, the third long-side section and the fourth long-side section are substantially parallel to one another; the first short-side section, the second short-side section, the third short-side section and the fourth short-side section are substantially parallel to one another; the first long-side section is substantially perpendicular to the first short-side section; the second long-side section is substantially perpendicular to the second short-side section; the third long-side section is substantially perpendicular to the third short-side section; and the fourth long-side section is substantially perpendicular to the fourth short-side section.

5. The wireless transmitting device for wireless charging according to claim 1, further comprising a detection module disposed in the main body for detecting whether the electronic device has been placed on the main body or not, and detecting which of the first encapsulated transmission coil and the second encapsulated transmission coil is approached by the electronic device; wherein if it is determined by the detection module that the electronic device is not disposed on the main body, the detection of the disposition of the electronic device on the main body continues; and if it is determined by the detection module that the electronic device has been disposed on the main body, which of the first encapsulated transmission coil and the second encapsulated transmission coil is approached by the electronic device is determined.

6. The wireless transmitting device for wireless charging according to claim 5, wherein if it is determined by the detection module that the electronic device has been disposed on the main body, and the electronic device approaches the first encapsulated transmission coil, the first encapsulated transmission coil is electrically conducted and generates and outputs the power to the encapsulated receiving coil; andif it is determined by the detection module that the electronic device has been disposed on the main body, and the electronic device approaches the second encapsulated transmission coil, the second encapsulated transmission coil is electrically conducted and generates and outputs the power to the encapsulated receiving coil.

7. The wireless transmitting device for wireless charging according to claim 1, further comprising:
a power cable connected to a power supply and exposed from the main body; and
a power module connected to the power cable, the first encapsulated transmission coil and the second encapsulated transmission coil, and driven by the power supply to generate a current, which flows through a selected one of the encapsulated transmission coils, thereby causing an electromagnetic effect and generating the power in response to the electromagnetic effect.

8. The wireless transmitting device for wireless charging according to claim 1, wherein the power is transmitted from the first encapsulated transmission coil or the second encapsulated transmission coil to the electronic device comprising the encapsulated receiving coil and further comprising:
an electronic device housing enclosing the encapsulated receiving coil, wherein when the electronic device housing approaches the main body or contact with the main body, the encapsulated receiving coil disposed in the electronic device housing receives the power from the first encapsulated transmission coil or the power the second encapsulated transmission coil; and
a rechargeable cell disposed in the electronic device housing and connected to the encapsulated receiving coil for storing the power received by the encapsulated receiving coil.

9. The wireless transmitting device for wireless charging according to claim 1, wherein the power is transmitted from the first encapsulated transmission coil or the second encapsulated transmission coil to the electronic device comprising the encapsulated receiving coil and further comprising:
an electronic device housing;
a protection cover enclosing the electronic device housing for protecting the electronic device housing, wherein the encapsulated receiving coil is disposed inside the protection cover, and wherein when the protection cover approaches the main body or contact with the main body, the encapsulated receiving coil disposed in the protection cover receives the power from the first encapsulated transmission coil or the power the second encapsulated transmission coil; and
a rechargeable cell disposed in the electronic device housing and connected to the encapsulated receiving coil via the protection cover for storing the power received by the encapsulated receiving coil.

10. The wireless transmitting device for wireless charging according to claim 1, wherein the power is transmitted from the first encapsulated transmission coil or the second encapsulated transmission coil to the electronic device comprising the encapsulated receiving coil having a circular configuration.
